# EUROPÄISCHE PATENTSCHRIFT

(11) **EP 2 509 825 B1**
(45) Veröffentlichungstag und Bekanntmachung des Hinweises auf die Patenterteilung: **12.02.2014**
(21) Anmeldenummer: 10793167.7
(22) Anmeldetag: 09.12.2010
(51) Int. Cl.: B60R 7/04, B32B 5/18, B60N 2/46, C09K 3/10, E06B 9/11

(54) **JALOUSIE ZUM VERSCHLIEßEN VON ÖFFNUNGEN IN KFZ-INNENRÄUMEN, ROLLOBOX MIT EINER JALOUSIE, MITTELKONSOLE MIT EINER ROLLOBOX SOWIE VERFAHREN ZUR HERSTELLUNG EINER JALOUSIE**
SHUTTER FOR CLOSING OPENINGS IN MOTOR VEHICLE INTERIORS, ROLLER SHUTTER BOX HAVING A SHUTTER, CENTRE CONSOLE HAVING A SHUTTER BOX AND METHOD FOR PRODUCING A SHUTTER
JALOUSIE PERMETTANT DE FERMER DES OUVERTURES DANS UN HABITACLE DE VÉHICULE AUTOMOBILE, CYLINDRE MUNI D'UNE JALOUSIE, CONSOLE CENTRALE MUNIE D'UN CYLINDRE, AINSI QUE PROCÉDÉ DE FABRICATION D'UNE JALOUSIE

(30) Priorität: 09.12.2009 DE 102009057783
(43) Veröffentlichungstag der Anmeldung: 17.10.2012
(73) Patentinhaber: Faurecia Innenraum Systeme GmbH, 76767 Hagenbach (DE)
(72) Erfinder: GANZ, Marco, 76448 Durmersheim (DE)
(74) Vertreter: Pfenning, Meinig & Partner GbR
(86) Internationale Anmeldenummer: PCT/EP2010/007625
(87) Internationale Veröffentlichungsnummer: WO 2011/069682

(56) Entgegenhaltungen:
- EP-A1- 1 690 740
- EP-A1- 1 724 155
- GB-A- 2 424 390
- US-A1- 2003 218 274
- US-A1- 2008 084 083

## Beschreibung

Die Erfindung betrifft eine Jalousie zum Verschließen von Öffnungen beispielsweise von Rolloboxen von Mittelkonsolen in Kraftfahrzeugen, eine Rollobox, eine Mittelkonsole, sowie ein Verfahren zum Herstellen einer derartigen Jalousie.

Aus dem Stand der Technik sind verschiedene Möglichkeiten zur Konstruktion von Jalousien zum Verschließen von Rollboxen, beispielsweise in Mittelkonsolen in Fahrzeugen, bekannt.

Aus der DE 4010241 ist es bekannt eine derartige Jalousie aus einer Vielzahl von Rollladenstäben herzustellen. Diese sind jeweils einzeln mit einem Dekorfurnier sowie optional mit einer Schutzschicht überzogen. Die Rollladenstäbe sind jeweils durch Zwischenstücke mit ihren Nachbarstäben gelenkig verbunden. Diese Anordnung hat den Nachteil, dass aufgrund des einzelnen Aufbringens der Furniere, sowie durch die Notwendigkeit der Vielzahl von einzelnen Zwischenstücken die Herstellung relativ kompliziert ist. Außerdem weist eine solche Jalousie den Nachteil auf, dass sie keine durchgängige Oberfläche aufweist, da sie an den Verbindungsstellen zwischen jeweils zwei Rollladenstäben abgesenkt ist. Hierdurch wird eine Reinigung des Rollladens erheblich erschwert.

Außerdem sind, beispielsweise aus der gattungsgemäßen EP 1 690 740 A1, Jalousien bekannt, welche aus einzelnen Lamellen bestehen, die durch eine Zwischenschicht verbunden sind. Auf die Zwischenschicht ist ein Dekor aufgebracht. Derartige Jalousien sind für den Nutzer leichter zu reinigen, allerdings ist die Herstellung immer noch sehr kostenaufwändig.

Die Aufgabe der Erfindung besteht daher darin, Jalousien zu ermöglichen, die sich bei zumindest gleichwertiger Qualität kostengünstiger herstellen lassen. Eine weitere Aufgabe besteht darin, ein vereinfachtes Verfahren zur Herstellung von Jalousien zu ermöglichen.

Diese Aufgaben werden durch eine Jalousie nach Anspruch 1, eine Rollobox nach Anspruch 6, eine Mittelkonsole nach Anspruch 9 sowie ein Verfahren nach Anspruch 10 gelöst. Durch die in den Unteransprüchen angegebenen Maßnahmen sind vorteilhafte Weiterbildungen und Verbesserungen möglich.

Dadurch, dass die Trägeranordnung mindestens einen einstückigen, eine Mehrzahl von Rollladenstangen bildenden, Träger aufweist, sind die Rollladenstangen bereits dadurch verbunden, dass sie durch den einstückigen Träger gebildet werden, sodass eine Notwendigkeit eines zusätzlichen Verbindens dieser Rollladenstangen untereinander entfällt. Mit Rollladenstangen sind hierbei jegliche stangen- oder lamellenförmigen Gegenstände zur Bildung einer Jalousie bzw. eines Rollladens gemeint.

Mit dem Begriff "einstückig" ist gemeint, dass der Träger als ein Stück gefertigt ist. Eine Mehrzahl von Rollladenstangen, die durch eine Klebeschicht miteinander verbunden sind, würde also keinen einstückigen Träger im Sinne der Erfindung bilden.

Vorteilhaft sind zumindest einige der Rollladenstangen gelenkig miteinander Verbunden. Eine Biegesteifigkeit in Biegerichtung der gelenkigen Verbindung ist vorteilhaft jeweils mittig zwischen zwei Rollladenstangen, d.h. vorzugsweise in der Mitte der gelenkigen Verbindung, minimal. Die Biegesteifigkeit in die zur Biegerichtung der gelenkigen Verbindung orthogonale Richtung ist vorteilhaft mindestens eine und besonders vorteilhaft mindestens zwei oder drei Größenordnung größer als die minimale Biegesteifigkeit in Biegerichtung der gelenkigen Verbindung und ist vorteilhaft hinreichend groß um ein übermäßiges Durchbiegen auch bei einer Belastung mit einer Kraft von mindestens 800N zu vermeiden.

In einer besonders vorteilhaften Ausführungsform sind die gelenkigen Verbindungen als Filmscharniere ausgebildet. Die Filmscharniere sind vorteilhaft sich in Scharnierrichtung auf Ihre Mitte zu verjüngend ausgebildet. Eine Länge der Filmscharniere beträgt vorteilhaft zwischen 1 mm und 4 mm, besonders vorteilhaft zwischen 2 mm und 3 mm und insbesondere 2,5 mm. Die Dicke an der dünnsten Stelle des Filmscharniers beträgt vorteilhaft zwischen 0,1 mm und 1 mm, besonders vorteilhaft zwischen 0,2 mm und 0,6 mm und insbesondere 0,4 mm.

Besonders vorteilhaft ist die Trägeranordnung als ein einziger einstückiger Träger ausgebildet. Hierdurch werden keinerlei zusätzliche Verbindungen zwischen Rollladenstangen oder verschiedenen Trägern mehr benötigt. Vorteilhaft hat der Träger eine Breite zwischen 50 mm und 300 mm, besonders vorteilhaft zwischen 80 mm und 200 mm und insbesondere von 120 mm und eine Länge zwischen 100 mm und 500 mm, besonders vorteilhaft zwischen 200 mm und 400 mm und insbesondere von 300 mm. Die einzelnen Rollladenstangen weisen vorteilhaft eine Breite zwischen 5 mm und 25 mm und besonders vorteilhaft zwischen 10 mm und 15 mm auf.

Der Träger kann auf besonders einfache Weise als Spritzgussträger ausgebildet sein. Von besonderem Vorteil ist dies insbesondere bei flexibler Verbindung der Rollladenstangen durch Filmscharniere, da so ein flexibles Verbinden der Rollladenstangen ohne zusätzlichen Aufwand möglich ist.

In einer bevorzugten Ausführungsform besteht der Träger aus einem Polymer, welcher insbesondere thermoplastisch sein kann. Die Ausbildung des Trägers aus einem derartigen Polymer ist vorteilhaft, da sich ein solches besonders leicht verarbeiten lässt. Beispielsweise eignen sich POM oder PA6 ideal als Materialien zur Ausbildung des Trägers. Vorteilhaft weist das Material einen Härtegrad von höchstens 95, besonders vorteilhaft 85 und insbesondere von höchstens 80 shore L auf. Zugleich beträgt der Härtegrad vorteilhaft mindestens 5, besonders vorteilhaft mindestens 50 und ganz besonders vorteilhaft mindestens 75 shore L. Jegliche durch beliebige Kombinationen der vorangehend genannten Höchst- und Minimalwerte umgrenzte Härtegradbereiche können als vorteilhaft betrachtet werden, wobei der Bereich zwischen 76 und 80 shore L besonders vorteilhaft ist. Die Wahl des Härtegrades in Kombination mit der Ausformung des Trägers ist entscheidend für die Eigenschaften der Jalousie. Ein niedriger Härtegrad führt zu einer angenehm weichen Haptik und zu einer erhöhten Flexibilität der gelenkigen Verbindungen. Wird jedoch der Härtegrad zu niedrig gewählt führt dies zu einer zu geringen Steifigkeit in Richtung der Rollladenstangen und somit zu einem unvorteilhaften Durchbiegen. Dem kann zwar durch eine dickere Ausbildung der Träger entgegengewirkt werden, jedoch erhöht dies sowohl Materialkosten als auch Platzbedarf der Jalousie.

Vorteilhaft ist es, die Dekorschicht direkt auf den Träger, d.h. ohne eine Zwischenschicht aufzubringen, da dies die Herstellung besonders vereinfacht. Alternativ kann jedoch auch eine Zwischenschicht, beispielsweise zur Beeinflussung der haptischen Eigenschaften z.B. durch Polsterung, vorteilhaft sein. Auch bei Verwendung einer solchen Zwischenschicht, mit der prinzipiell auch separate Rollladenstangen verbunden werden könnten, wird die Herstellung gegenüber dem Stand der Technik vereinfacht. Bei Verwendung von separaten Rollladenstangen müssen diese beim Aufbringen einer, zugleich zur Verbindung und zur Verbesserung der haptischen Eigenschaften dienenden Schicht aufwändig einzeln fixiert werden, während bei Verwendung mindestens eines einstückigen, mehrere Rollladenstangen enthaltenden, Trägers eine einzelne Fixierung der Rollladenstangen wegfällt.

Die Dekorschicht kann beispielsweise aus Leder, Kunstleder, einem Stoff oder einem anderen Textil bestehen. Eine Dicke der Dekorschicht beträgt vorteilhaft zwischen 0,3 mm und 2 mm, besonders vorteilhaft zwischen 0,5 mm und 1,2 mm und insbesondere 0,8 mm. Ein Härtegrad der Dekorschicht liegt vorteilhaft zwischen 25 und 85, besonders vorteilhaft zwischen 45 und 65 und insbesondere bei 55 shore A.

Vorteilhaft kann auf die Dekorschicht ein Zierelement aufgebracht oder in die Dekorschicht eingebracht sein. Als Zierelement kann beispielsweise eine Prägung, ein Aufdruck oder eine Ziernaht dienen.

Weiterhin betrifft die Erfindung eine Rollobox mit einem Staufach und einer wie vorangehend beschriebenen Jalousie, wobei die Jalousie zum Verschließen des Staufachs angeordnet ist.

Vorteilhaft weist die Rollobox mindestens zwei Führungsschienen auf, welche zur Führung des Rollos angeordnet sind. Vorteilhaft sind die Enden der Rollladenstangen sowie die Führungsschienen derart ausgebildet, dass die Jalousie auch im Falle eines Durchbiegens, beispielsweise durch ein auf der Jalousie abgestelltes schweres Gewicht, nicht seitlich aus der Führungsschiene hinausrutschen kann. Vorteilhaft sind die Führungsschiene sowie die Enden der Rollladenstangen derart ausgebildet, dass im Falle einer zur übermäßigen Durchbiegung führenden Belastung ein Teil einer durch die Belastung verursachten Kraft durch die Führungsschiene aufgenommen wird.

In einer besonders vorteilhaften Ausführungsform weisen die Führungsschienen zwei winklig, vorteilhaft rechtwinklig, zueinander angeordnete Schenkel auf. Diese Schenkel können stoffschlüssig miteinander verbunden sein, sodass die Führungsschiene einteilig ist. Alternativ kann die Führungsschiene jedoch auch aus mehreren getrennten Schienen gebildet werden. Durch eine Winklige Ausgestaltung der Führungsschienen kann die Jalousie beim Öffnen teilweise in einen für den Nutzer nicht einsehbaren Bereich, wie beispielsweise in eine hohle Außenwand der Rollobox verschoben werden.

Des Weiteren betrifft die Erfindung einer Mittelkonsole mit einer vorangehend beschriebenen Rollobox.

Außerdem umfasst die Erfindung ein Verfahren zur Herstellung einer Jalousie welches die Schritte Herstellen einer Trägeranordnung mit mindestens einem einstückigen eine Mehrzahl von Rollladenstangen bildenden Träger und Aufbringen einer Dekorschicht auf die Trägeranordnung umfasst.

Besonders einfach kann die Dekorschicht auf die Trägeranordnung durch Kleben aufgebracht werden. Der Träger kann insbesondere durch Spritzgießen hergestellt werden.

Vorteilhaft wird die Dekorschicht beim Verfahren in eine gewünschte Form geschnitten. Außerdem ist es Vorteilhaft als zusätzlichen Schritt Zierelemente auf die Dekorschicht aufzubringen. Des Weiteren ist es vorteilhaft Klebstoff auf den Träger aufzubringen.

In einer besonders vorteilhaften Ausführungsform wird das Zuschneiden der Dekorschicht, das Aufbringen von Zierelementen auf die Dekorschicht und/oder das Aufbringen von Klebstoff auf den Träger parallel zu einem der anderen Schritte durchgeführt.

Ausführungsbeispiele der Erfindung sind in den Zeichnungen dargestellt und werden in der nachfolgenden Beschreibung näher erläutert. Es zeigen:
- Fig. 1: Explosionsdarstellung eines Ausführungsbeispiels einer erfindungsgemäßen Jalousie,
- Fig. 2: Seitenansicht der Jalousie aus Figur 1,
- Fig. 3: Detailansicht der Jalousie aus Figur 1,
- Fig. 4: Detailansicht einer zweiten Ausführungsform einer erfindungsgemäßen Jalousie,
- Fig. 5: Schräge Aufsicht auf eine erfindungsgemäße als Mittelkonsole ausgebildete Rollobox,
- Fig. 6: Schnittansicht der Rollobox aus Figur 6,
- Fig. 7: Aufsicht auf die Rollobox aus Figur 6 und
- Fig. 8: Schnitt entlang einer Rollladenstange durch die Rollobox aus Figur 6.

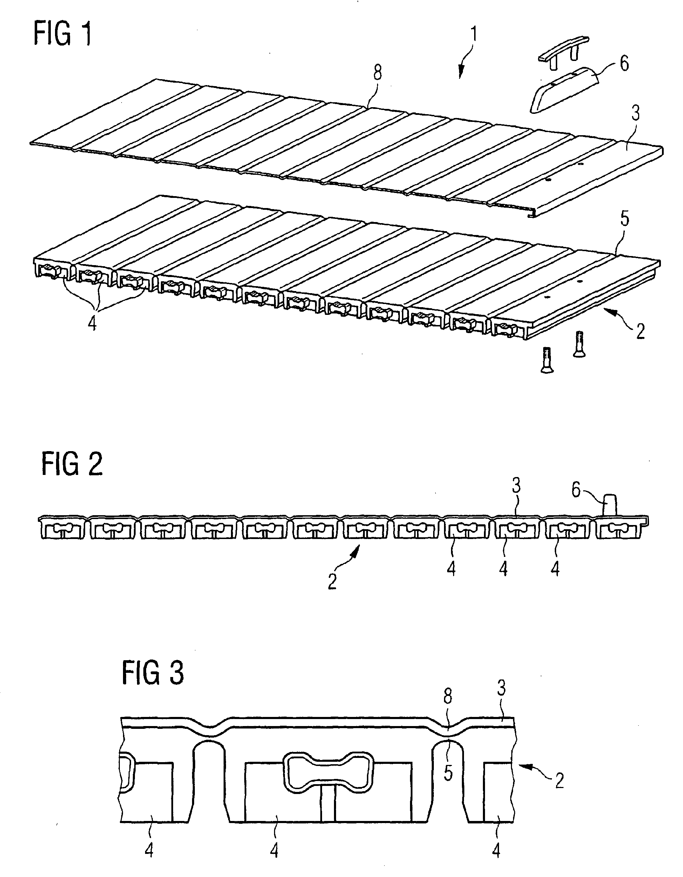

In Figur 1 ist eine Jalousie 1 in Explosionsdarstellung gezeigt. Die Jalousie 1 besteht aus einem Träger 2 sowie einer Dekorschicht 3. Der Träger 2 weist im dargestellten Ausführungsbeispiel eine Länge von 300 mm und eine Breite von 120 mm auf, ist einstückig ausgebildet und besteht aus einer Mehrzahl von Rollladenstangen 4. Die Rollladenstangen weisen in diesem Ausführungsbeispiel eine Breite von 12mm auf und sind, wie am besten Figur 3 zu entnehmen ist, durch Filmscharniere 5 flexibel verbunden sind. Die Filmscharniere sind an der dünnsten Stelle etwa 0,4 mm Dick und etwa 2 mm bis 3 mm lang.

Der Träger 2 kann beispielsweise aus thermoplastischem POM bestehen und wurde durch ein Spritzgussverfahren in einem Verfahrensschritt einteilig hergestellt. Im vorliegenden Ausführungsbeispiel weist der Träger einen Härtegrad von 76 shore L auf. Die Gesamtbiegesteifigkeit der Jalousie in Biegerichtung der Filmscharniere 5 ist hinreichend gering um ein einfaches Verbiegen der Jalousie, beispielsweise zum Verschieben der Jalousie in einer gebogenen Führungsschiene, zu ermöglichen. Die Biegesteifigkeit der Filmscharniere selbst ist niedriger als die durchschnittliche Biegesteifigkeit in Biegerichtung und ist in der Mitte der Filmscharniere 5 minimal. Orthogonal zur Biegerichtung der Filmscharniere 5 ist die Biegesteifigkeit mehr als eine Größenordnung größer als die Biegesteifigkeit in Biegerichtung der Scharniere. In dem in den Figuren 1 bis 3 dargestellten Ausführungsbeispiel ist die Dekorschicht 3 direkt auf den Träger aufgebracht. Die Dekorschicht 3 besteht aus Leder und ist mit gesteppten Ziernähten 8 sowie einer nicht dargestellten Prägung versehen. Durch die Dekorschicht 3 hindurch ist ein Bedienelement 6 zum Auf- und Zuziehen der Jalousie mit dem Träger verschraubt.

Die Jalousie 1 wurde dadurch hergestellt, dass zunächst der Träger 2 in einem Spritzgießverfahren erzeugt und die Dekorschicht 3 zurechtgeschnitten wurde. Anschließend wurde Klebstoff auf den Träger 2 aufgebracht. Der Träger 2 und das Dekormaterial 3 wurden dann in ein Kaschierwerkzeug eingebracht mit dem die Dekorschicht 3 auf den Träger 2 aufgedrückt wurde. Hierzu wurde ein Kaschierwerkzeug mit einer strukturierten Oberfläche verwendet, durch die gleichzeitig eine Prägung in das Dekormaterial eingebracht wurde. Nach dem Entnehmen der Jalousie aus dem Kaschierwerkzeug wurde das Bedienelement 6 angebracht.

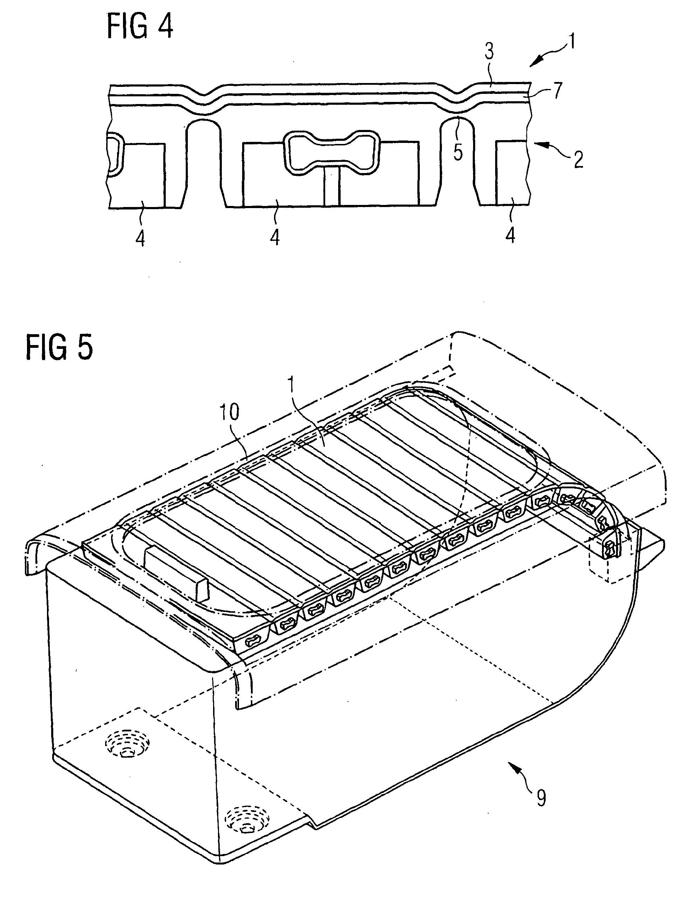

Das in Figur 4 gezeigte Ausführungsbeispiel unterscheidet sich von dem vorangehend beschriebenen Beispiel lediglich dadurch, dass zwischen dem Träger und der Dekorschicht eine weiche Zwischenschicht 7 angeordnet ist. Statt Leder wurde Kunstleder als Dekormaterial verwendet.

In Figur 5 ist eine erfindungsgemäße Rollobox 9 dargestellt, die als Mittelkonsole ausgebildet ist. Die Rollobox 9 weist eine Öffnung 10 auf. Diese ist durch die Jalousie 1 verschlossen.

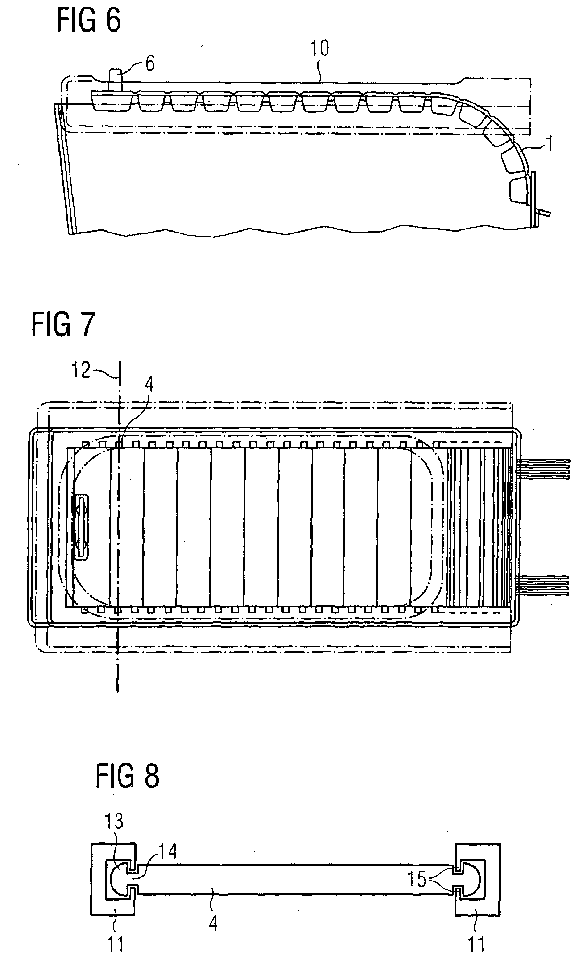

In Figur 6 ist ein Längsschnitt durch die Rollobox 7 gezeigt, wobei einige Details zugunsten der Übersichtlichkeit weggelassen wurden. Die Jalousie 1 verdeckt die Öffnung 8 und ist in jeweils einer vor und hinter der Bildebene liegenden Ebene durch jeweils eine in dieser Schnittebene nicht sichtbare Schiene geführt. Die Schiene gibt den Verlauf der Jalousie 1 vor. Hierzu weist die Schiene eine der dargestellten Anordnung der Jalousie entsprechende winklige Form mit einer abgerundeten Ecke auf. In Figur 8 ist ein Schnitt längs durch eine Rollostange und somit quer durch die führenden Schienen 11, entlang der Schnittlinie 12, welche in Figur 7 dargestellt ist, gezeigt.

Wie zu erkennen ist weisen die Rollladenstangen 4 in dem dargestellten Ausführungsbeispiel auf beiden Seiten ein abgerundetes Ende 13 und eine vor dem Ende angeordnete Verjüngung 14 auf. Die Schienen 11 sind derart geformt, dass auf beiden Seiten der Rollostange eine Kante 15 der Schienen 9 in die Verjüngung 14 eingreift. Hierdurch wird verhindert, dass sich die Rollladenstange 4 im Falle einer übermäßigen Kraftbelastung von oben derart durchbiegt, dass eines oder beide ihrer Enden 13 aus der Schiene 11 rutschen. Stattdessen nimmt bei einer solchen Belastung die Schiene 11 die Kraft auf. Da die Schiene nur in Maßen in diese Richtung belastbar ist, ist es vorteilhaft, dass der Träger, welcher die Rollostange beinhaltet, eine hinreichend große Biegesteifigkeit in eine zur Scharnierrichtung der Filmscharniere 5 orthogonale Richtung aufweist, damit eine übermäßige Durchbiegung, also eine Durchbiegung die zu einer seitlichen Belastung der Führungsschienen führen würde, zumindest bei einer Belastung durch eine Kraft von bis zu 800N von oben auf die Jalousie der Rollobox vermieden wird.

Hierdurch werden die Schienen üblicherweise nur durch eine nach unten gerichtete Kraft belastet, sodass die Kanten 15 zumeist nur vernachlässigbar wenig belastet werden.

Bei hinreichender Biegesteifigkeit in die zur Scharnierrichtung orthogonale Richtung kann es auch vorteilhaft sein, die Rollostangen ohne eine Verjüngung 14 auszubilden und die Kante 15 der Schiene wegzulassen, da derartige Schienen und Jalousien einfacher zu produzieren sind.

## Patentansprüche

1. Jalousie (1) zum verschiebbaren Verschließen von Öffnungen in Kraftfahrzeuginnenräumen, insbesondere von Rolloboxen, mit einer Dekorschicht (3) und einer Trägeranordnung, **dadurch gekennzeichnet, dass** die Trägeranordnung mindestens einen einstückigen, eine Mehrzahl von Rollladenstangen (4) bildenden, Träger (2) aufweist, wobei die Trägeranordnung aus einem Polymer mit einem Härtegrad zwischen 5 und 95 Shore L ist und wobei die Dekorschicht (3) einen Härtegrad zwischen 25 und 85 Shore A aufweist.

2. Jalousie nach Anspruch 1, **dadurch gekennzeichnet, dass** die mehreren durch den einstückigen Träger (2) gebildeten Rollladenstangen (4) zumindest teilweise flexibel miteinander verbunden sind, wobei die flexible Verbindung vorteilhaft als mindestens ein durch den einstückigen Träger gebildetes Filmscharnier (5) ausgebildet ist.

3. Jalousie nach einem der vorherigen Ansprüche, **dadurch gekennzeichnet, dass** die Trägeranordnung als ein einstückiger Träger (2) ausgebildet ist und/oder **dadurch gekennzeichnet, dass** die Trägeranordnung als mindestens ein Spritzgussträger ausgebildet ist und/oder **dadurch gekennzeichnet, dass** das Polymer der Trägeranordnung einen Härtegrad zwischen 50 und 85 und insbesondere zwischen 76 und 80 Shore L aufweist und/oder als thermoplastisches Polymer ausgebildet ist und/oder **dadurch gekennzeichnet, dass** die Dekorschicht (3) direkt auf die Trägeranordnung aufgebracht ist.

4. Jalousie nach einem der vorherigen Ansprüche, **dadurch gekennzeichnet, dass** die Dekorschicht (3) zumindest teilweise aus Leder, Kunstleder, Stoff und/oder einem Textil besteht.

5. Jalousie nach einem der vorherigen Ansprüche, **dadurch gekennzeichnet, dass** die Dekorschicht (3) mindestens ein Zierelement beinhaltet oder dass mindestens ein Zierelement auf die Dekorschicht (3) aufgebracht ist, wobei das Zierelement vorteilhaft als Ziernaht (8), Einprägung und/oder Aufdruck ausgebildet ist.

6. Rollobox für eine Mittelkonsole in Kraftfahrzeugen enthaltend mindestens ein Staufach sowie mindestens eine Jalousie nach einem der vorangehenden Ansprüche, wobei die Jalousie zum Verschließen des Staufachs angeordnet und ausgebildet ist.

7. Rollobox nach Anspruch 6, **dadurch gekennzeichnet, dass** die Rollobox mindestens zwei Führungsschienen zum Führen des Rollos beinhaltet.

8. Rollobox nach Anspruch 7, **dadurch gekennzeichnet, dass** die Führungsschienen als abgewinkelte Führungsschienen ausgebildet sind, insbesondere derart, dass ein Winkel zwischen einem ersten Schenkel und einem zweiten Schenkel der Führungsschienen zwischen 70° und 110°, vorzugsweise zwischen 80° und 100° und insbesondere 90° beträgt.

9. Mittelkonsole mit einer Rollobox nach einem der Ansprüche 6 bis 9.

10. Verfahren zur Herstellung einer Jalousie (1) mit den Schritten
- Herstellen einer Trägeranordnung mit mindestens einem einstückigen eine Mehrzahl von Rollladenstangen bildenden Träger (2) aus einem Polymer mit einem Härtegrad zwischen 5 und 95 Shore L und
- Aufbringen einer Dekorschicht (3) mit einem Härtegrad zwischen 25 und 85 Shore A auf die Trägeranordnung.

11. Verfahren nach Anspruch 10, **dadurch gekennzeichnet, dass** die Dekorschicht (3) durch Kleben aufgebracht wird.

12. Verfahren nach Anspruch 10 oder 11, **dadurch gekennzeichnet, dass** als zusätzlicher Schritt die Dekorschicht (3) in eine gewünschte Form geschnitten wird.

13. Verfahren nach einem der Ansprüche 10 bis 12, **dadurch gekennzeichnet, dass** als zusätzlicher Schritt die Dekorschicht mit Zierelemente versehen wird.

14. Verfahren nach einem der Ansprüche 10 bis 13, **dadurch gekennzeichnet, dass** als zusätzlicher Schritt Klebstoff auf den Träger (2) aufgebracht wird.

15. Verfahren nach einem der Ansprüche 12 bis 14, **dadurch gekennzeichnet, dass** mindestens einer der Schritte Zuschneiden der Dekorschicht, Aufbringen von Zierelementen auf die Dekorschicht und/oder Aufbringen von Klebstoff auf den Träger parallel zu einem der anderen Schritte durchgeführt wird.

## Claims

1. A blind (1) for the displaceable closure of openings in motor vehicle interiors, in particular roller blind boxes, with a decor layer (3) and with a carrier arrangement, **characterised in that** the carrier arrangement comprises at least one single-piece carrier (2) forming a plurality of roller shutter rods (4), wherein the carrier arrangement is of a polymer with a hardness degree of between 5 and 95 Shore L and wherein the decor layer (5) has a hardness degree of between 25 and 85 shore A.

2. A blind according to claim 1, **characterised in that** the several roller shutter rods (4) which are formed by the single-piece carrier (2) are connected to one another at least partly in a flexible manner, wherein the flexible connection is advantageously designed as at least one film hinge (5) formed by the single-piece carrier.

3. A blind according to one of the preceding claims, **characterised in that** the carrier arrangement is designed as a single-piece carrier (2) and/or **characterised in that** the carrier arrangement is designed as at least one injection moulded carrier and/or **characterised in that** the polymer of the carrier arrangement has a hardness degree between 50 and 85 and in particular between 76 and 80 Shore L and/or is designed as a thermoplastic polymer and/or **characterised in that** the decor layer (3) is deposited directly onto the carrier arrangement.

4. A blind according to one of the preceding claims, **characterised in that** the decor layer (3) at least partly consists of leather, artificial leather, fabric and/or a textile.

5. A blind according to one of the preceding claims, **characterised in that** the decor layer (3) comprises at least one decorative element or that at least one decorative element is deposited onto the decor layer (3), wherein the decorative element is advantageously designed as a decorative seam (8), embossing and/or print.

6. A roller blind box for a centre console in motor vehicles comprising at least one storage compartment as well as at least one blind according to one of the preceding claims, wherein the blind is arranged and designed for the closure of the storage compartment.

7. A roller blind box according to claim 6, **characterised in that** the roller blind box comprises at least two guide rails for guiding the roller blind.

8. A roller blind box according to claim 7, **characterised in that** the guide rails are designed as angled guide rails, in particular in a manner such that an angle between a first limb and a second limb of the guide rails is between 70° and 110°, preferably between 80° and 100° and in particular 90°

9. A centre console with a roller blind box according to one of the claims 6 to 9.

10. A method for manufacturing a blind (1) with the steps
- manufacturing a carrier arrangement with at least one single-piece carrier (2) of a polymer with a hardness degree of between 5 and 95 Shore L and forming a plurality of roller shutter rods and
- depositing a decor layer (3) with a hardness degree between 25 and 8 Shore A onto the carrier arrangement.

11. A method according to claim 10, **characterised in that** the decor layer (3) is deposited by way of bonding.

12. A method according to claim 10 or 11, **characterised in that** as an additional step, the decor layer (3) is cut into a desired shape.

13. A method according to one of the claims 10 to 12, **characterised in that** at as additional step, the decor layer is provided with decorative elements.

14. A method according to one of the claims 10 to 13, **characterised in that** as an additional step, adhesive is deposited onto the carrier (2).

15. A method according to one of the claims 12 to 14, **characterised in that** at least one of the steps of cutting to size of the decor layer, depositing decorative elements onto the decor layer and/or depositing adhesive onto the carrier is carried out parallel to one of the other steps.

## Revendications

1. Volet roulant (1) permettant de fermer de manière coulissante des ouvertures dans des habitacles de véhicule automobile, en particulier des boîtes à volet roulant, comportant une couche décorative (3) et un agencement de support, **caractérisée en ce que** l'agencement de support comporte au moins un support (2) d'une seule pièce formant une pluralité de tiges de volet roulant (4), l'agencement de support étant fabriqué en polymère avec un degré de dureté entre 5 et 95 Shore L et la couche décorative (3) présentant un degré de dureté entre 25 et 85 Shore A.

2. Volet roulant selon la revendication 1, **caractérisée en ce que** plusieurs tiges de volet roulant (4), formées par le support (2) d'une seule pièce, sont reliées entre elles au moins partiellement de manière flexible, la liaison flexible étant façonnée avantageusement sous la forme d'au moins une charnière en film (5) formée par le support d'une seule pièce.

3. Volet roulant selon l'une quelconque des revendications précédentes, **caractérisée en ce que** l'agencement de support est réalisé sous la forme d'un support (2) d'une seule pièce, et/ou **caractérisée en ce que** l'agencement de support est façonné sous la forme d'au moins un support moulé par injection et/ou **caractérisée en ce que** le polymère de l'agencement de support possède un degré de dureté compris entre 50 et 85 et en particulier entre 76 et 80 Shore L et/ou est façonné sous la forme d'un polymère thermoplastique, et/ou **caractérisée en ce que** la couche décorative (3) est appliquée directement sur l'agencement de support.

4. Volet roulant selon l'une quelconque des revendications précédentes, **caractérisée en ce que** la couche décorative (3) se compose au moins partiellement en cuir, en similicuir, en tissu et/ou dans un textile.

5. Volet roulant selon l'une quelconque des revendications précédentes, **caractérisée en ce que** la couche décorative (3) contient au moins un élément décoratif ou **en ce qu'**au moins un élément décoratif est appliqué sur la couche décorative (3), l'élément décoratif étant façonné avantageusement sous la forme d'une couture décorative (8), d'une gravure et/ou d'une impression.

6. Boîte à volet roulant pour une console centrale dans les véhicules automobiles, contenant au moins un compartiment pour le rangement, ainsi qu'au moins un volet roulant selon l'une quelconque des revendications précédentes, le volet roulant étant agencé et façonné pour fermer le compartiment pour le rangement.

7. Boîte à volet roulant selon la revendication 6, **caractérisé en ce que** la boîte à volet roulant contient au moins deux rails de guidage permettant le guidage du volet roulant.

8. Boîte à volet roulant selon la revendication 7, **caractérisé en ce que** les rails de guidage sont façonnés sous la forme de rails de guidage coudés, en particulier de telle sorte qu'un angle formé entre une première branche et une deuxième branche des rails de guidage mesure entre 70 ° et 110 °, de préférence entre 80 ° et 100 ° et en particulier 90 °.

9. Console centrale comportant une boîte à volet roulant selon l'une quelconque des revendications 6 à 9.

10. Procédé de fabrication d'un volet roulant (1), comportant les étapes de :
fabrication d'un agencement de support doté d'au moins un support (2) d'une seule pièce, formant une pluralité de tiges de volet roulant qui est fabriqué en polymère avec un degré de dureté compris entre 5 et 95 Shore L, et
application d'une couche décorative (3) avec un degré de dureté compris entre 25 et 85 Shore A sur l'agencement de support.

11. Procédé selon la revendication 10, **caractérisé en ce que** la couche décorative (3) est appliquée par collage.

12. Procédé selon la revendication 10 ou 11, **caractérisé en ce qu'**une étape supplémentaire consiste à découper la couche décorative (3) suivant une forme souhaitée.

13. Procédé selon l'une quelconque des revendications 10 à 12, **caractérisé en ce qu'**une étape supplémentaire consiste à munir la couche décorative d'éléments décoratifs.

14. Procédé selon l'une quelconque des revendications 10 à 13, **caractérisé en ce qu'**une étape supplémentaire consiste à appliquer un adhésif sur le support (2).

15. Procédé selon l'une quelconque des revendications 12 à 14, **caractérisé en ce qu'**au moins une des étapes, parmi la découpe de la couche décorative, l'application d'éléments décoratifs sur la couche décorative et/ou l'application d'un adhésif sur le support, est réalisée en parallèle à une des autres étapes.
